# EUROPÄISCHE PATENTSCHRIFT

(11) **EP 1 924 791 B1**
(45) Veröffentlichungstag und Bekanntmachung des Hinweises auf die Patenterteilung: **29.07.2009**
(21) Anmeldenummer: 06754339.7
(22) Anmeldetag: 13.06.2006
(51) Int. Cl.: F16J 15/08

(54) **METALLISCHE FLACHDICHTUNG**
FLAT METAL GASKETS
JOINT PLAT METALLIQUE

(30) Priorität: 13.09.2005 DE 102005043630
(43) Veröffentlichungstag der Anmeldung: 28.05.2008
(73) Patentinhaber: Federal-Mogul Sealing Systems GmbH, 57562 Herdorf (DE)
(72) Erfinder: SCHMITT, Klaus, 57520 Grünebach (DE); BUCHEN, Dietmar, 50823 Köln (DE); CIEROCKI, Klaus, 89437 Hausnheim (DE); FLEMMING, Ralf, 57520 Langenbach (DE); KOEHLER, Hubert, 57518 Betzdorf (DE)
(74) Vertreter: Becker Kurig Straus
(86) Internationale Anmeldenummer: PCT/EP2006/005674
(87) Internationale Veröffentlichungsnummer: WO 2007/031127

(56) Entgegenhaltungen:
- EP-A- 1 243 820
- DE-A1- 10 053 556
- US-A1- 2004 262 850
- US-A1- 2005 189 724

## Beschreibung

Die vorliegende Erfindung betrifft metallische Flachdichtungen wie beispielsweise Zylinderkopfdichtungen von Verbrennungsmotoren.

Nachdem es in der Technik bekannt wurde, anstelle von Papp- und Vliesdichtungen mehrlagige Metallflachdichtungen einzusetzen sind die unterschiedlichsten Ausführungsformen bekannt.

Zum Stand der Technik sei explizit auf das Dokument WO 03010450 verwiesen, das eine zweilagige oder mehrlagige Metallflachdichtung offenbart, die im Bereich des Brennraums einen eingelegten Verpressungsbegrenzer aufweist. In der WO 03010450 liegt der Verpressungsbegrenzer in der Ebene der Mittellage der Metallflachdichtung. Der Verpressungsbegrenzer ist in der Metalldichtung mittels Hohlnieten befestigt, wobei ein Ringsegment der Hohlniete jeweils den Verpressungsbegrenzer und ein anderes Ringsegment der Hohlniete jeweils die Mittellage der Flachdichtung umgreift. Das Prinzip ist beispielsweise aus der Lagerung von "schwimmenden Bremsscheiben, wie sie von Motorrädern bekannt sind, am besten ersichtlich.

Eine andere Art, Verpressungsbegrenzer an Metallflachdichtungen zu befestigen ist beispielsweise aus der amerikanischen Patentschrift US 6,027124 bekannt. Dieses Dokument offenbart eine, auf Laschen basierende Befestigung von Verpressungsbegrenzem an einer Metallflachdichtung. Dabei werden Laschen die aus dem Verpressungsbegrenzer geformt sind durch Schlitze in der Metallflachdichtung geschoben, sodass der Verpressungsbegrenzer formschlüssig an der Metallflachdichtung befestigt ist.

Es ist ebenfalls bekannt Verpressungsbegrenzer, Stopperschichten bzw. Stopperlagen mittels Schweißverfahren wie beispielsweise Laser-Schweißen an anderen Dichtschichten zu befestigen.

Stopperlagen dienen dabei insbesondere bei Zylinderkopfdichtungen dazu, den Verpressungsdruck im Bereich um den Brennraum zu erhöhen, um den Brennraum sicher abdichten zu können. Zylinderkopfdichtungen weise zudem oft noch andere Dichtbereiche auf, um beispielsweise Kühlwasser- oder Ölleitungen, die von dem Motorblock zum Zylinderkopf durch die Zylinderkopfdichtung geführt werden, abzudichten.

Es ist die Aufgabe der vorliegenden Erfindung Verpressungsbegrenzer, Stopperlagen bzw. Stopperbrillen an anderen Lagen einer metallischen Flachdichtung wie beispielsweise einer Zylinderkopfdichtung anzubringen bzw. zu verbinden, ohne auf kostspielige Verfahren wie beispielsweise Laser-Schweißen zurückgreifen zu müssen.

Die Aufgabe der vorliegenden Erfindung wird durch eine Flachdichtung mit mindestens drei Lagen erreicht. Die mindestens drei Lagen, umfassen dabei jeweils mindestens eine Mittellage, eine Funktionslage und eine Lage eines Verpressungsbegrenzers. Die Mittellage ist zwischen der Funktionslage und dem Verpressungsbegrenzer angeordnet. Die Mittellage weist außerhalb eines Dichtbereichs mindestens zwei im Wesentlichen runde Befestigungsöffnungen auf, um den Verpressungsbegrenzer an der Mittellage zu befestigen. Der Verpressungsbegrenzer ist im Bereich der Befestigungsöffnungen um den Rand der Befestigungsöffnungen der Mittellage gebördelt, wodurch der Verpressungsbegrenzer an der Mittellage befestigt ist. Die Funktionslage weist im Bereich der Befestigungsöffnungen der Mittellage und der Umbördelung Ausnehmungen auf. Die Ausnehmung kann den umbördelten Bereich des Verpressungsbegrenzers aufnehmen und sicherstellen, dass die Flachdichtung keine Bereiche mit mehr als drei Lagen umfasst. Durch diese Bauform kann die Gesamtdicke der Dichtung im Bereich der Befestigung des Verpressungsbegrenzers klein gehalten werden, sodass die Funktion der Flachdichtung, insbesondere die Konzentration der Verpressung auf den Bereich der Flachdichtung mit dem Verpressungsbegrenzer aufrechterhalten werden.

Der Stopper bzw. Verpressungsbegrenzer kann somit durch die Umbördelung formschlüssig mit der Mittellage bzw. Distanzlage verbunden werden. Die Verwendung eines aufwendigen und kostenintensiven Laser-Schweißverfahrens kann vermieden werden.

Die Umbördelung wirkt dabei wie ein Hohlniet, der einstückig aus dem Verpressungsbegrenzer geformt ist. Die Umbördelung kann dabei beispielsweise aus einem Durchzug hervorgehen, der vergrößert, aufgeweitet, umgebogen und flach gepresst wird. Da die Umbördelung und die Befestigung außerhalb des Dichtbereichs der Flachdichtung liegen, kann die Umbördelung durchaus Risse oder Grate aufweisen, ohne die Funktion der Flachdichtung zu beeinträchtigen. Die Umbördelung dient dabei lediglich zur Fixierung des Verpressungsbegrenzers und weist keine abdichtenden Eigenschaften auf.

Bevorzugt ist die Materialstärke der Funktionslage mindestens groß wie die Materialstärke des Verpressungsbegrenzers. Dadurch kann sicher gestellt werden, dass (im zusammengepressten Zustand) der Stapel aus Funktionslage, Mittellage und Verpressungsbegrenzer immer höher ist als der Stapel aus Verpressungsbegrenzer, Mittellage und umgebördelten Verpressungsbegrenzer. Tatsächlich ist es auch denkbar, dass die Funktionslage etwas dünner ist als der Verpressungsbegrenzer, da die Materialstärke des Verpressungsbegrenzers durch das Umbördeln leicht verringert wird.

Vorzugsweise entspricht der Durchmesser der Befestigungslöcher in der Mittellage mindestens 9-mal der Materialstärke der Mittellage. In dieser Ausführungsform kann der Verpressungsbegrenzer (der vermutlich dünner ausgeführt ist als die Mittellage) durch die Befestigungslöcher geführt werden, um auf der anderen Seite der Mittellage umgebördelt zu werden.

In einer bevorzugten Ausführungsform der Flachdichtung ist der Durchmesser der Ausnehmungen in der Mittellage mindestens 1,5-mal größer als der Durchmesser der Befestigungslöcher. Dadurch kann sicher gestellt werden, dass die Umbördelung in der Ausnehmung untergebracht werden kann. Es ist ebenfalls möglich die Ausnehmungen oval bzw. ovalrund zu gestalten, um es den Funktionslagen zu ermöglichen aufgrund von zusammengepressten Sicken und/oder aufgrund von Wärmeausdehnung auszuweichen und sich entlang des abzudichtenden Dichtspalts zu bewegen.

Vorteilhaft ist die Funktionslage eine erste Funktionslage. Die Flachdichtung umfasst in dieser Ausführungsform eine zweite Funktionslage, die auf der Mittellage, der ersten Funktionslage gegenüberliegend angeordnet ist. Damit ergibt sich ein Aufbau mit vier Lagen, wobei die Mittellage und der Verpressungsbegrenzer sich zwischen den Funktionslagen befinden.

Vorzugsweise ist mindestens eine der Funktionslagen, mit mindestens einer Beschichtung aus Elastomermaterial versehen. Die Beschichtung kann beispielsweise dazu dienen, Kühlwasser- und/oder Öldurchführungen bzw. Wasser- und/oder Öldichtbereiche zu verstärken.

Bevorzugt umfassen die Funktionslagen jeweils mindestens eine Lage aus Chrom-Nickel-Federstahl. Die Funktionslagen können dadurch mit Halb- und Vollsicken versehen werden, um diese Bereiche besser abdichten zu können.

Es ist ebenfalls bevorzugt, die Mittellage aus Federstahl zu fertigen und mit zusätzlichen Sicken und eventuell auch mit Beschichtungen zu versehen. In einer Ausführungsform ist die Dichtung mit drei Schichten versehen, wobei die Mittellage als zweite Funktionslage aus Federstahl dient.

Vorzugsweise weisen die Funktionslagen Halb- und Vollsicken auf. Voll- und Halbsicken dienen neben der Abdichtung auch zu einer Vereinfachung der Montage beispielsweise einer Zylinderkopfdichtung.

Vorteilhaft ist die Flachdichtung eine Zylinderkopfdichtung mit Brennraumdichtungslöchern.

Bevorzugt liegen die Mittellage, die erste und/oder zweite Funktionslage und der Verpressungsbegrenzer (bzw. die Lage eines Verpressungsbegrenzers) im Bereich der Brennraumlöcher übereinander, wobei sie jeweils mit einer Seitenfläche einen Teil des Brennraums bilden. Bei dieser Ausführungsform ist der Verpressungsbegrenzer nicht im Bereich des Brennraums umgebördelt, sondern die einzelnen Lagen liegen im Bereich des Brennraums sandwichartig übereinander.

Vorzugsweise ist die Zylinderkopfdichtung eine Zylinderkopfdichtung eines Mehrkolbenmotors ist, wobei der Verpressungsbegrenzer als eine "Stopperbrille" ausgeführt ist. Der Verpressungsbegrenzer erstreckt sich dabei (mit Ausnahme der Umbördelungen zur Befestigung) nur im Bereich der Brennräume und weist im Wesentlichen eine 8-förmige, bzw. doppelachtförmige Gestalt auf, die an den Stellen an denen sich die einzelnen Kreise (bzw. Brennräume) berühren miteinander verbunden sind. Diese Struktur ist zudem mit Ösen zur Befestigung versehen.

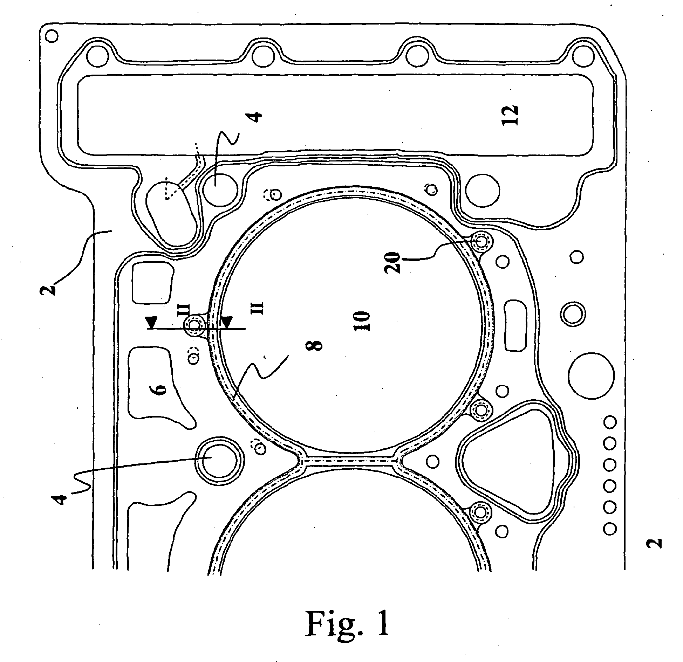

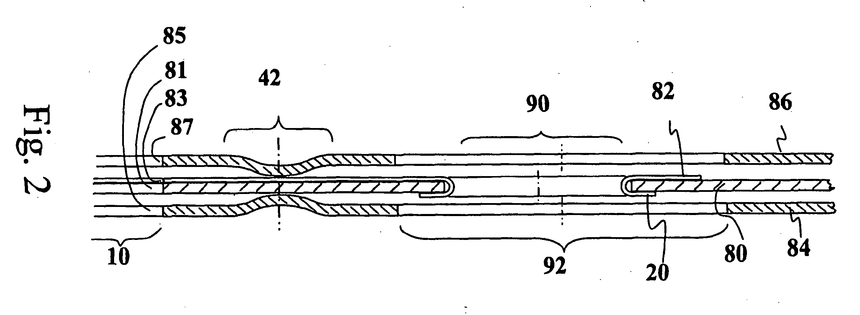

Figuren 1 und 2 zeigen jeweils eine Aufsicht und einen Querschnitt durch eine erfindungsgemäße Zylinderkopfdichtung.

Figur 1 zeigt einen Ausschnitt aus einer erfindungsgemäßen Zylinderkopfdichtung. Die Zylinderkopfdichtung 2 ist dabei mit Löchern 4 für Zylinderkopfschrauben versehen. Manche der Löcher für Zylinderkopfschrauben sind mit Sicken zum Abdichten versehen. Die Zylinderkopfdichtung ist ebenfalls mit Löchern 6 für Kühlwasser versehen. Um die Brennräume 10 ist der Verpressungsbegrenzer 8 zu ernennen, der an den Befestigungslöchern um die Mittellage mit Umbördelungen 20 befestigt dargestellt ist. Die Ausnehmung 12 in der Dichtung dient dazu einen (z.b. Ketten-) Antrieb für eine obenliegende Nockenwelle unterzubringen. Figur 2 stellt einen Querschnitt durch die gesamte Zylinderkopfdichtung entlang der Linie II-II von Figur 1 dar. Der Stopper ist als Brille ausgebildet und an den Befestigungslöchern 90 an der Distanzlage (bzw.. Mittellage) befestigt. An der Stelle an der die Verpressungsbegrenzerlage um die Befestigungslöcher der Mittellage gebördelt sind, sind die äußeren Funktionslagen (d.h. die erste Funktionslage 84 und die zweite Funktionslage 86) mit Ausnehmungen 92 versehen, deren Abmessungen größer sind als die Löcher für den Bördel, bzw. größer sind als die Außendurchmesser der Bördel.

An dem Brennraum liegen jeweils die Kante 81 der Mittellage, die Kante 83 des Verpressungsbegrenzers, die Kante 85 der ersten Funktionslage und die Kante 87 der zweiten Funktionslage sandwichartig übereinander. Die Zylinderkopfdichtung ist nicht mit einer den Brennraum einfassenden Umbördelung versehen.

Die Funktionslagen 84 und 86 sind an der Mittellage beispielsweise durch Schweißpunkte befestigt. An der Stelle 42 sind die Funktionslagen 84 und 86 im Dichtbereich mit Sicken versehen.

## Patentansprüche

1. Flaclidichtung (2) mit mindestens drei Lagen, nämlich einer Mittellage (80), einer Funktionslage (84) und einer Lage (82) eines Verpressungsbegrenzers, Wobei die Mittellage (80) zwischen der Funktionslage (84) und dem Verpressungsbegrenzer (82) angeordnet ist, **dadurch gekennzeichnet dass**
- die Mittellage (80) außerhalb eines Dichtbereichs (42) mindestens zwei im Wesentlichen runde Befestigungsöffnungen (90) aufweist, und
- der Verpressungsbegrenzer (82) im Bereich der Befestigungsöffnungen (90) um den Rand der Befestigungsöffnungen (90) gebördelt ist, und so den Verpressungsbegrenzer (82) an der Mittellage (80) befestigt,
- die Funktionslage (84) im Bereich der Befestigungungsöffnungen (90) der Mittellage Ausnehmungen (92) aufweist, um den umgebördelten Bereich (20) des Verpressungsbegrenzers (82) unterzubringen, ohne die Gesamtdicke der Dichtung (2) im Bereich der Befestigung des Verpressungsbegrenzers (80) erhöhen.

2. Flachdichtung gemäß Anspruch 1, **dadurch gekennzeichnet, dass** die Funktionslage (84) eine Materialstärke aufweist, die mindestens so groß ist wie die Materialstärke des Verpressungsbegrenzers (82).

3. Flachdichtung gemäß einem der vorstehenden Ansprüche, **dadurch gekennzeichnet, dass** der Durchmesser der Befestigungslöcher (90) der Mittellage (80) mindestens 9-mal der Materialstärke des Verpressungsbegrenzers (82) entspricht.

4. Flachdichtung gemäß einem der vorstehenden Ansprüche, **dadurch gekennzeichnet, dass** der Durchmesser der Ausnehmungen (92) in der Funktionslage (84) mindestens 1,5-mal größer ist,als der Durchmesser der Befestigungslöcher (90).

5. Flachdichtung gemäß einem der vorstehenden Ansprüche, **dadurch gekennzeichnet, dass** die Funktionslage (84) eine erste Funktionslage (84) ist, und die Flachdichtung eine zweite Funktionslage (86) aufweist, die auf der Nüttellage (80), der ersten Funktionslage (84) gegenüberliegend angeordnet ist.

6. Flachdichtung gemäß einem,der vorstehenden Ansprüche, **dadurch gekennzeichnet, dass** mindestens eine Funktionslage (84,86), mit mindestens einer Beschichtung aus Elastomermaterial versehen ist.

7. Flachdichtung gemäß einem der vorstehenden Ansprüche, **dadurch gekennzeichnet, dass** die Funktionslagen (84,86) jeweils mindestens eine Lage aus Chrom-Nickel-Federstahl umfassen.

8. Flachdichtung gemäß einem der vorstehenden Ansprüche, **dadurch gekennzeichnet, dass** die Funktionslagen (84, 86) Halb-und Vollsicken aufweisen.

9. Flachdichtung gemäß einem der vorstehenden Ansprüche, **dadurch gekennzeichnet, dass** die Flachdichtung (2) eine Zylinderkopfdichtung mit Brennraumdichtungslöchem (10) ist.

10. Zylinderkopfdichtung (2) gemäß Anspruch 9, **dadurch gekennzeichnet, dass** Mittellage (80), die erste (84) und/oder zweite (86) Funktionslage im Bereich der Brennraumlöcher (10) übereinander liegen und mit einer Seitenfläche (81, 83, 85, 87) einen Teil des Brennraums (10) bilden.

11. Zylinderkopfdichtung (2) gemäß Anspruch 9 oder 10, **dadurch gekennzeichnet, dass** die Zylinderkopfdichtung eine Zylinderkopfdichtung eines Mehrkolbenmotors ist, wobei der Verpressungsbegrenze (82) als eine Stopperbrille ausgefiihrt ist.

## Claims

1. Flat gasket (2) with at least three layers, namely a mid-layer (80), a function layer (84) and a layer (82) of a compression limiter, wherein
- the mid-layer (80) is arranged between the function layer (84) and the compression limiter (82),
- the mid-layer (80) has at least two essentially round fixing openings (90) outside a sealing region (42),
- the compression limiter (82) in the region of the fixing openings (90) is beaded around the edges of the fixing openings (90), and in this way fixes the compression limiter (82) to the mid-layer (80),
- the function layer (84) has recesses (92) in the region of the fixing openings (90) of the mid-layer, in order to accommodate the beaded region (20) of the compression limiter (82), without increasing the total thickness of the gasket (2) in the region of the fixing of the compression limiter (82).

2. Flat gasket according to claim 1, **characterised in that** the function layer (84) has a material thickness that is at least as big as the material thickness of the compression limiter (82).

3. Flat gasket according to one of the preceding claims, **characterised in that** the diameter of the fixing holes (90) in the mid-layer (80) corresponds to at least 9 times the material thickness of the compression limiter (82).

4. Flat gasket according to one of the preceding claims, **characterised in that** the diameter of the recesses (92) in the function layer (84) is at least 1.5 times bigger than the diameter of the fixing holes (90).

5. Flat gasket according to one of the preceding claims, **characterised in that** the function layer (84) is a first function layer (84), and that the flat gasket comprises a second function layer (86), which is arranged on the mid-layer (80), facing the first function layer (84).

6. Flat gasket according to one of the preceding claims, **characterised in that** at least one function layer (84; 86) is provided with at least one coating of an elastomer material.

7. Flat gasket according to one of the preceding claims, **characterised in that** the function layers (84; 86) respectively comprise at least one layer of chrome-nickel spring steel.

8. Flat gasket according to one of the preceding claims, **characterised in that** the function layers (84; 86) comprise half- and full-beads.

9. Flat gasket according to one of the preceding claims,
**characterised in that** the flat gasket (2) is a cylinder head gasket with combustion chamber sealing holes (10).

10. Cylinder head gasket (2) according to claim 9,
**characterised in that** the mid-layer (80), the first (84) and/or second (86) function layer lie on top of one another in the region of the combustion chamber holes (10), and with one side surface (81, 83, 85, 87) form a part of the combustion chamber (10).

11. Cylinder head gasket (2) according to claim 9 or 10, **characterised in that** the cylinder head gasket is a cylinder head gasket of a multi-piston engine, wherein the compression limiter (82) is embodied as a stopper collar plate.

## Revendications

1. Joint plat (2) comprenant au moins trois couches, à savoir une couche moyenne (80), une couche de fonction (84) et une couche (82) d'un limiteur de compression, la couche moyenne (80) étant disposée entre la couche de fonction (84) et le limiteur de compression (82), **caractérisé en ce que**
- la couche moyenne (80) présente en dehors d'une zone d'étanchéité (42) au moins deux ouvertures de la fixation (90) sensiblement rondes, et
- le limiteur de compression (82) est bordé dans la zone des ouvertures de fixation (90) autour du bord des ouvertures de fixation (90), et fixe ainsi le limiteur de compression (82) sur la couche moyenne (80),
- la couche de fonction (84) présente des évidements (92) dans la zone des ouvertures de fixation (90) de la couche moyenne, afin de loger la zone (20) rabattue du limiteur de compression (82), sans augmenter l'épaisseur globale du joint (2) dans la zone de la fixation du limiteur de compression (80).

2. Joint plat selon la revendication 1, **caractérisé en ce que** la couche de fonction (84) présente une épaisseur de matériau qui est au moins aussi grande que l'épaisseur de matériau du limiteur de compression (82).

3. Joint plat selon l'une quelconque des revendications précédentes, **caractérisé en ce que** le diamètre des trous de fixation (90) dans la couche moyenne (80) correspond au moins à 9 fois l'épaisseur de matériau de limiteur de compression (82).

4. Joint plat selon l'une des quelconques revendications précédentes, **caractérisé en ce que** le diamètre des évidements (92) dans la couche de fonction (84) est au moins 1,5 fois plus grand plus que le diamètre des trous de fixation (90).

5. Joint plat selon l'une quelconque des revendications précédentes, **caractérisé en ce que** la couche de fonction (84) est une première couche de fonction (84) et **en ce que** le joint plat présente une seconde couche de fonction (86), qui est disposée sur la couche centrale (80), en face de la première couche de fonction (84).

6. Joint plat selon l'une quelconque des revendications précédentes, **caractérisé en ce que** une couche de fonction (84, 86) est doté d'au moins un revêtement à base de matériau élastomère.

7. Joint plat selon l'une quelconque des revendications précédentes, **caractérisé en ce que** .les couches de fonction (84, 86) comportent chacune au moins une couche à base d'acier au chrome-nickel pour ressort.

8. Joint plat selon l'une quelconque des revendications précédentes, **caractérisé en ce que** les couches de fonction (84, 86) présentent des demi-moulures et des moulures pleines.

9. Joint plat selon l'une quelconque des revendications précédentes, **caractérisé en ce que** le joint plat (2) est un joint de culasse avec des trous d'étanchéité de chambre de combustion (10).

10. Joint de culasse (2) selon la revendication 9,
**caractérisé en ce que** la couche moyenne (80), la première couche de fonction (84) et/ou la seconde couche de fonction (86) sont situées dans la zone des trous de chambre de combustion (10) les unes au-dessus des autres et forment avec une surface latérale (81, 83, 85, 87) une partie de la chambre de combustion (10).

11. Joint de culasse (2) selon la revendication 9 ou 10, **caractérisé en ce que** le joint de culasse est un joint de culasse d'un moteur à plusieurs pistons, le limiteur de compression (82) étant réalisé sous la forme d'une lunette de butée.
